# EUROPEAN PATENT APPLICATION

(11) **EP 3 852 079 A1**
(43) Date of publication of application: **21.07.2021**
(21) Application number: 20305035.6
(22) Date of filing: 16.01.2020
(51) Int. Cl.: G08G 1/0962, B60W 40/08, G06K 9/00, B60W 50/14

(54) **DRIVER ATTENTION SYSTEM**

(71) Applicant: TOYOTA JIDOSHA KABUSHIKI KAISHA, Toyota-shi, Aichi-ken, 471-8571 (JP)
(72) Inventor: GIROND, Paul, 1140 Brussels (BE)
(74) Representative: Cabinet Beau de Loménie

(57) **Abstract**

A driver attention system and method is provided. The system having a first sensor configured to sense a lead vehicle in front of the main vehicle; a second sensor configured to obtain image information of the driver; an electronic control unit; and a driver stimulation element configured to draw attention of the driver via stimuli if the lead vehicle has moved and the driver is not paying attention.

## Description

### FIELD OF THE DISCLOSURE

The present disclosure relates to a driver attention system. More particularly, the present disclosure relates to a lead vehicle notification system including a system for attracting driver attention and improving the driver's awareness.

### BACKGROUND OF THE DISCLOSURE

Often, a driver becomes distracted and is not paying attention to a traffic scene. For example, in a circumstance of high traffic and traffic jams, a driver may avert their attention to, for example, a mobile device while a lead vehicle in front of them moves forward. However, since the driver is not paying attention to the lead vehicle, they remain stopped and cause a problem of blocking the flow of traffic.

To address this problem, sensors that are configured to alert the driver of a changing traffic scene have been incorporated into vehicles. As in the aforementioned example, a vehicle may make a sound if the lead vehicle begins to move away from the user vehicle.

However, this method of alerting a driver does not take into account if the driver is paying attention or is not paying attention. As a result, some drivers find the constant alerting function annoying and opt not to enable this helpful feature. Additionally, the alerting system of previous inventions does not permit a user to customize the distance between the user vehicle and the lead vehicle that will trigger the alert. Therefore, in locations where users typically have a large amount of space between a user vehicle and lead vehicle, for example, the United States, the alert may be triggered every time the user vehicle is stopped.

Therefore, it would be advantageous to have a lead vehicle notification system that notifies a driver when the driver is not paying attention as well as allow the driver to customize the settings that cause the alert to be triggered.

### SUMMARY OF THE DISCLOSURE

The inventors have recognized that there is a need for the driver to quickly become ready and able to control his vehicle when the driver has not been focused on the driving scene (e.g., texting, reading, etc.) when a lead vehicle moves away from the main vehicle (e.g., a traffic light turns green).

According to embodiments of the disclosure, in order to meet the above need, a driver attention system is provided. A driver attention system for a main vehicle comprises a first sensor configured to sense a lead vehicle in front of the main vehicle; a second sensor configured to obtain image information of the driver; an electronic control unit; and a driver stimulation device configured to draw attention of the driver via stimuli. The electronic control unit is configured to: determine a distance between the lead vehicle and the main vehicle based on an output of the first sensor; determine whether the driver is attentive to the lead vehicle based on an output of the second sensor; and control a lead vehicle notification function. If the distance from the main vehicle to the lead vehicle is within a predetermined distance range and increases for more than a predetermined extent (threshold) and at the same time the driver is not attentive to the lead vehicle (and optionally at the same time the speed of the main vehicle is below a predetermined minimum speed, in particular in case the speed of the main vehicle is zero), trigger the driver stimulation device.

By providing such a system, driver attentiveness is enhanced, while at the same time, possible annoyance by having such an alarm is reduced. As a result, drivers are more likely to enable this function in their vehicle and traffic flow is less likely to be blocked.

The driver stimulation device may comprise at least one of a light source, a sound-emitting device, and a haptic signal-emitting device.

The second sensor may comprise a camera, in particular a 3D camera, in more particular a stereo camera or a time-of-flight camera, and/or the second sensor is configured to detect the driver's and/or the driver's gaze direction.

The first sensor may comprise any one of an IR type distance sensor, radar, camera, and LiDAR.

The predetermined distance range Xd may be 2m<Xd<10m.

The predetermined extent may be 1m to 6.

The predetermined distance range and/or the predetermined extent may be settable by the driver.

The lead vehicle notification function the driver stimulation device may be triggered only if the driver is not attentive to the lead vehicle.

The driver stimulation device may be triggered only if the speed of the main vehicle is below a predetermined minimum speed, in particular if the speed of the main vehicle is zero. It is also possible that the lead vehicle notification function is started only, in case the speed of the main vehicle is below a predetermined minimum speed, in particular in case the speed of the main vehicle is zero.

According to further embodiments of the present disclosure, a method for improving driver attention is provided. The method comprising: providing a driver attention system for a main vehicle according to any one of the aforementioned driver attention systems; determining, with the first sensor, a distance between the lead vehicle and the main vehicle based on an output of the first sensor; determining, with the second sensor, if the driver is attentive to the lead vehicle; and control a lead vehicle notification function. If the distance from the main vehicle to the lead vehicle is within a predetermined distance range and increases for more than a predetermined extent and at the same time the driver is not attentive to the lead vehicle, trigger the driver stimulation device.

### BRIEF DESCRIPTION OF THE DRAWINGS

The present invention may be better understood and its numerous other objects and advantages will become apparent to those skilled in the art by reference to the accompanying drawing wherein like reference numerals refer to like elements in the following figures and in which :
Fig. 1 is a schematic drawing of a driver attention system according to a first embodiment of the invention;
Fig. 2A is a schematic drawing of a lead vehicle detection system when the main vehicle and lead vehicle are a first distance apart;
Fig. 2B is a schematic drawing of a lead vehicle detection system when the main vehicle and lead vehicle are a predetermined distance apart;
Fig. 3 is a schematic drawing of a driver attention detection system; and
Fig. 4 is an exemplary decision chart for determining when stimuli is to be provided to a driver.

### DESCRIPTION OF THE EMBODIMENTS

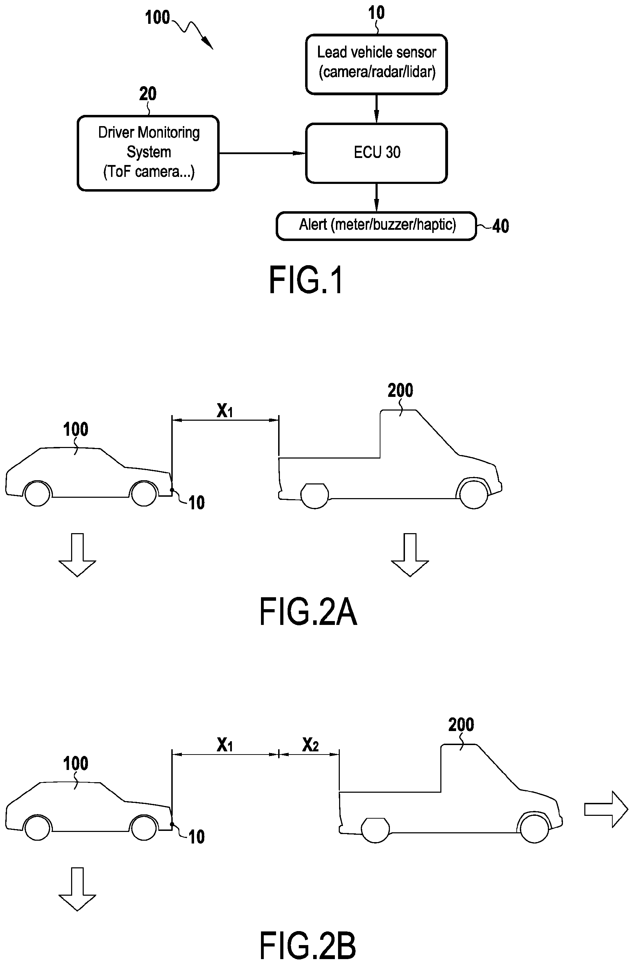

Fig. 1 is a schematic drawing of a driver attention system according to embodiments of the disclosure.

The driver attention system 100 comprises or is configured to carry out a lead vehicle notification (LVN) function. The system 100 may include a first sensor 10 for sensing a lead vehicle, a second sensor 20 that functions as a driver monitoring system, an electronic control unit 30 for processing the data obtained from the first and second sensors 10, 20, and sending a command to alert a driver; and an stimulation element 40 that alerts the driver. The system may be a vehicle or may be comprised by a vehicle.

Fig. 2A shows a main vehicle 100 following a lead vehicle 200. Disposed in the front of the main vehicle 100 is the first sensor 10. The first sensor 10 is configured to sense a distance X1 between the main vehicle 100 and the lead vehicle 200. The first sensor 10 may be an IR type distance sensor, radar, camera, and/or LiDAR. The vehicles 100 and 200 may have stopped, e.g. in front of a crossing or in a traffic jam.

Fig. 2B shows a main vehicle 100 following a lead vehicle 200 but at a second distance X2 between the main vehicle 100 and the lead vehicle 200. In this example, the second distance X2 is larger than the first distance X1.

In particular, fig. 2b shows the same scenario as fig. 2a but with the lead vehicle 200 having moved away from the not-moving main vehicle 100 for an additional distance X2 (i.e. an extent of distance XI). In other words, the ego(main) vehicle 100 remained immoveable, while target (lead) vehicle distance is now increased to X1 + X2.

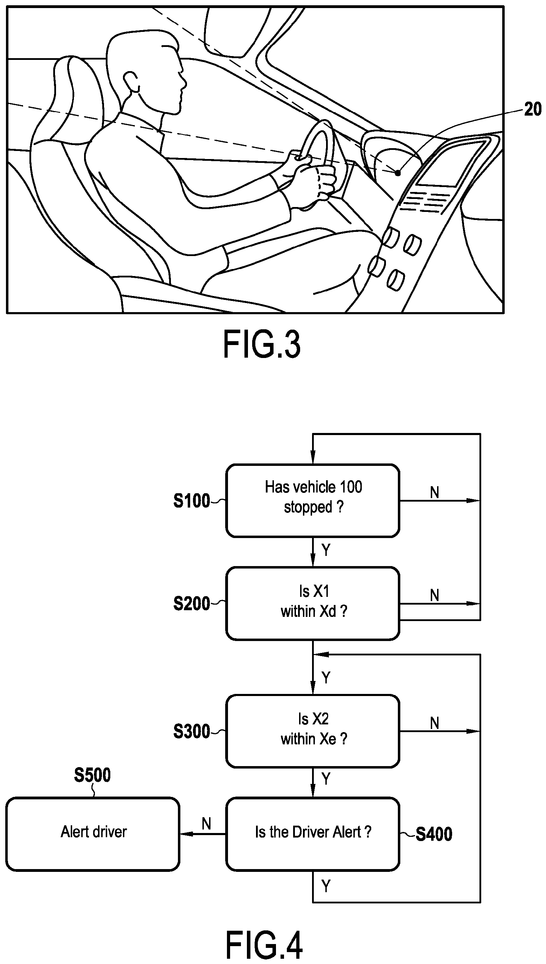

Fig. 3 shows a second sensor 20 disposed in a dashboard of a vehicle, where the second sensor 20 is configured to capture image information about the driver. The second sensor 20 may be a camera, in particular a 3D camera, in more particular a stereo camera or a time-of-flight camera. The second sensor may be configured to detect the driver's and/or the driver's gaze direction.

Turning back to Fig. 1, the electronic control 30 unit may be an automotive-grade control unit comprising one or more processors, and may, for example, comprise a plurality of control units. One of skill understands that, while discussed in the context of being mounted in a vehicle 100 (shown in figure 2), the control unit 30 could be located (all or in part) in a remote location, with the remote elements being configured to communicate in real time with the elements aboard the vehicle, for example, via any suitable wireless communication protocol (BLE, 3G, 4G, etc.).

The control unit 30 may be configured to receive information from the first and second sensors 10, 20 to enable control unit 30 to carry out the driver attention system functions.

The control unit 30 may further be configured to receive vehicle information (e.g. from a CAN bus), re. the vehicle speed. In particular, the control unit 30 may determine whether the vehicle 100 has stopped, or alternatively whether it is moving with a speed slower than a predetermined minimum speed (e.g. 5 km/h).

The first sensor 10 is configured to communicate a distance between the main vehicle 100 and a vehicle 200 in front (i.e. the lead vehicle) to the control unit 30. When the vehicle 100 has stopped or alternatively is moving with a speed slower than a predetermined minimum speed, the control unit 30 is configured to determine said distance as a first distance X1. In particular, the control unit 30 determines, whether said first distance X1 is within a predetermined distance Xd that may be based on the factory settings of the control unit or the customized settings set by the driver. The predetermined distance Xd may be in a range 2m≤Xd≤10m or 5m≤Xd≤10m. In such a case the control unit assumes, that the vehicle 100 is in a heavy traffic situation e.g. in a traffic jam or waiting at a crossing / traffic light.

The first sensor 10 is configured to monitor the distance to front vehicle 200. In case the front vehicle 200 moves away from the vehicle 100, meanwhile the vehicle 100 is still stopped or alternatively is moving with a speed slower than a predetermined minimum speed, the control unit 30 determines the increase (or increment) of the distance as an extent X2. The control unit 30 is further configured to determine if the extent X2 is within a predetermined extent Xe that may be based on the factory settings of the control unit or the customized settings set by the driver.

The predetermined extent Xe may be an upper threshold for the extent X2, e.g. 1, 2, 3, 4, 5 or 6 m. In other words, in case lead vehicle is within the predetermined distance Xd (e.g. both vehicles being stopped at a traffic like), It is determined whether the lead vehicle moves away from the main vehicle 100 for an additional distance X2 exceeding Xe.

The second sensor 20 is configured to communicate image information about the driver to the control unit 30. Based on the captured image information, the control unit 30 may determine that the driver is not paying attention. This may be achieved, for example, by detecting the direction of the driver's gaze or position of the driver's head.

The driver attention system may further include one or more stimulation elements 40 to stimulate the driver in order to develop awareness when the desire to draw such awareness arises. These stimulation elements 40 may include, for example, one or more light-emitting devices, one or more sound-emitting devices, one or more haptic signal-emitting devices, etc.

Each stimulation element 40 may be communicatively connected to the ECU 30, for example, via a wireless connection or a wired connection as desired.

The one or more light-emitting devices may comprise, for example, a light strip comprising a plurality of LEDs (Light-emitting diodes) or other suitable light sources, mounted on a dashboard, windshield, and/or steering wheel, (not shown), for example. Alternatively, or in addition, heads-up style lighting may be provided as one or more light emitting devices.

The one or more sound-emitting devices may comprise one or more speakers located, for example, in the steering wheel, in dashboard, in ears of a seat headrest (not shown).

The one or more haptic signal emitting devices may be formed by arranging vibrating plates in the seat bottom of the driver's seat (not shown).

These locations noted above have been selected so that the stimulation signals may be easily perceived by the driver sitting in a primary position of the vehicle 100. One of skill in the art will recognize that these locations are exemplary only.

The stimulation elements, for example, light strip may be configured to provide feedback to the occupant of the primary position, for example, indicating that the lead vehicle is stopped. In order to accomplish this, for example, the electronic control unit 30 may activate the stimulation element 40 according to a periodic stimulation pattern, e.g., a basic pulsed light pattern, to inform the person in the primary position that the lead vehicle is stopped.

Fig. 4 shows a flow chart detailing a method of improving a driver's attention.

In step S100, the control unit 30 determines whether the vehicle 100 has stopped or alternatively whether it is moving with a speed slower than a predetermined minimum speed. If the determination in step 100 is negative, the step is repeated.

If the determination in step 100 is positive, the control unit 30 determines in step 200 whether the distance X1 is within the predetermined distance Xd.

If the first distance X1 is not within the predetermined distance Xd, then step S100 may be executed again. If the first distance X1 is within the predetermined distance Xd, then the process moves to step S300.

In step S300, the control unit 30 determines whether the lead vehicle 200 moves away for an additional second distance (i.e. extent) X2. If the second distance X2 is within the predetermined extent Xe, then step S300 is executed again. If the second distance X2 exceeds the predetermined extent Xe, then the process moves to step S400.

In step S400, the second sensor 20 may communicate the captured image information of the driver to the control unit 30. The control unit 30 then determines whether the driver is paying attention. If the driver is paying attention, the process begins again. If the driver is not paying attention, the process moves to S500.

In S500, the stimulation element 40 is triggered to alert the driver. The stimulation element 40 may be configured to operate for a predetermined amount of time, for example 30 seconds. However, the stimulation element 40 may be configured to continue until the control unit 30 determines that the driver is aware based on the captured image data communicated from the second sensor 20.

Although the present disclosure herein has been described with reference to particular embodiments, it is to be understood that these embodiments are merely illustrative of the principles and applications of the present disclosure.

Where any standards of national, international, or other standards body are referenced (e.g., ISO, SAE, etc.), such references are intended to refer to the standard as defined by the national or international standards body as of the priority date of the present specification. Any subsequent substantive changes to such standards are not intended to modify the scope and/or definitions of the present disclosure and/or claims.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

It is intended that the specification and examples be considered as exemplary only, with a true scope of the disclosure being indicated by the following claims.

## Claims

1. A driver attention system for a main vehicle (100), comprising:
a first sensor (10) configured to sense a lead vehicle in front of the main vehicle;
a second sensor (20) configured to obtain image information of the driver;
an electronic control unit (30); and
a driver stimulation element (40) configured to draw attention of the driver via stimuli, wherein
the electronic control unit (30) is configured to:
determine a distance between the lead vehicle and the main vehicle based on an output of the first sensor;
determine whether the driver is attentive to the lead vehicle based on an output of the second sensor; and
control a lead vehicle notification function, wherein, if the distance (XI) from the main vehicle to the lead vehicle is within a predetermined distance range (Xd) and increases for more than a predetermined extent (Xe) and at the same time the driver is not attentive to the lead vehicle, trigger the driver stimulation device.

2. The driver attention system according to claim 1, wherein the driver stimulation element comprises at least one of a light source, a sound-emitting device, and a haptic signal-emitting device.

3. The driver attention system according to claims 1 or 2, wherein the second sensor comprises a camera, in particular a 3D camera, in more particular a stereo camera or a time-of-flight camera, and/or
the second sensor is configured to detect the driver's and/or the driver's gaze direction.

4. The driver attention system according to any one of the preceding claims, wherein the first sensor comprises any one of an IR type distance sensor, radar, camera, and LiDAR.

5. The driver attention system according to any one of the preceding claims, wherein the predetermined distance range is 2m to 10m, and/or
the predetermined extent is 1m to 6m.

6. The driver attention system according to any one of the preceding claims, wherein the predetermined distance range and/or the predetermined extent is settable by the driver.

7. The driver attention system according to any one of the preceding claims, wherein in the lead vehicle notification function the driver stimulation device is triggered only if the driver is not attentive to the lead vehicle.

8. The driver attention system according to any one of the preceding claims, wherein in the lead vehicle notification function the driver stimulation element is triggered only, in case the speed of the main vehicle is below a predetermined minimum speed, in particular in case the speed of the main vehicle is zero, or
the lead vehicle notification function is started only, in case the speed of the main vehicle is below a predetermined minimum speed, in particular in case the speed of the main vehicle is zero.

9. A method for improving driver attention, the method comprising:
providing a driver attention system for a main vehicle according to any one of claims 1-8;
determining, with the first sensor, a distance between the lead vehicle and
the main vehicle based on an output of the first sensor;
determining, with the second sensor, if the driver is attentive to the lead vehicle; and
control a lead vehicle notification function, wherein, if the distance from the main vehicle to the lead vehicle is within a predetermined distance range and increases for more than a predetermined extent (Xe) and at the same time the driver is not attentive to the lead vehicle, trigger the driver stimulation device.
